# EUROPÄISCHE PATENTANMELDUNG

(11) **EP 1 341 291 A2**
(43) Veröffentlichungstag der Anmeldung: **03.09.2003**
(21) Anmeldenummer: 03001920.2
(22) Anmeldetag: 30.01.2003
(51) Int. Cl.: H02K 7/14, H02K 5/00, H02K 5/15, F04D 27/02, F04D 29/60

(54) **Maschine mit schnelldrehendem Rotor**

(30) Priorität: 28.02.2002 DE 10208795
(71) Anmelder: Pfeiffer Vacuum GmbH, 35614 Asslar (DE)
(72) Erfinder: Fahrenbach, Peter, 35619 Braunfels (DE)

(57) **Zusammenfassung**

Die Erfindung beschreibt eine Maschine mit schnelldrehendem Rotor, z.B. eine Vakuumpumpe. Die Verbindungsflächen (14-17) der Maschine zu externen Anschlüssen bzw. zwischen einzelnen Abschnitten der feststehenden Bauteile, wie z.B. dem Gehäuse, werden durch die erfindungsgemäßen Maßnahmen mit Oberflächen versehen, welche eine erhöhte Reibungszahl aufweisen.

## Beschreibung

Die Erfindung betrifft eine Maschine mit schnelldrehendem Rotor nach dem Oberbegriff des 1. bzw. des 2. Schutzanspruches.

Maschinen mit schnelldrehendem Rotor, wie z. B. Vakuumpumpen oder Zentrifugen, speichern in ihrem Rotor aufgrund dessen hoher Drehzahl große Mengen von Energie. Bei einem Rotor-/Stator-Crash wird diese Energie über feststehende Bauteile, wie z. B. Anschlussflansche oder Unterteile, an andere Anlagenbauteile abgegeben. Durch das entstehende Drehmoment kann es zu Schäden oder zur Zerstörung von Teilen der mit der Maschine verbundenen Anlage, zu einem Abreißen oder Verdrehen der Maschine an der Anlage oder zu einem Abreißen von Bauteilverbindungen in der Maschine und damit zur Gefährdung von Personen kommen.

Bei Vakuumanlagen treten bei einem Crash in der Regel Lecks auf, welche den ablaufenden Prozess so empfindlich stören, dass er abgebrochen werden muss. Auch können z. B. toxische Gase freigesetzt werden, was zur Kontamination der Umgebung führt.

Die Verbindungselemente z. B. zwischen einer Anlage und einer mit ihr gekoppelten Vakuumpumpe, wie Pumpenflansch, Anlagenflansch, Zentrierring, Pratzen, Boden befestigung oder in der Pumpe Unterteil, Zwischenstück und Gehäuse, bestehen in der Regel aus Aluminium oder Stahl. Oft werden diese Bauteile zum Zwecke des Korrosionsschutzes lackiert oder vernickelt, wodurch die Reibungszahl heruntergesetzt wird. Die Reibungszahl der Verbindungen hat aber einen entscheidenden Einfluss auf die Verdrehsicherheit der Pumpe oder der Pumpenbauteile.

Zur Erhöhung der Verdrehsicherheit können die Befestigungselemente, z. B. Schrauben oder Bolzen, verstärkt oder deren Anzahl erhöht werden. Damit sind aufwändige Konstruktionen und hohe Kosten verbunden. Zudem wird die Vielfalt der Verbindungsmöglichkeiten durch Normvorschriften eingeschränkt.

Der Erfindung liegt die Aufgabe zugrunde, eine sichere Verbindung einer Maschine mit schnelldrehendem Rotor mit einer Anlage, einer Bodenbefestigung oder auch der Maschinenbauteile untereinander herzustellen, bei der verhindert wird, dass bei einem Rotor-/Stator-Crash größere Schäden entstehen. Die Lösung soll weniger aufwändig als herkömmliche Konstruktionen sein und nicht durch Normvorschriften eingeschränkt werden.

Die Aufgabe wird durch die kennzeichnenden Merkmale des 1. Patentanspruches gelöst. Die Ansprüche 2 - 8 stellen weitere Ausgestaltungsformen der Erfindung dar.

Dadurch, dass die Verbindungsflächen zu den externen Anschlüssen oder zwischen den einzelnen Abschnitten der feststehenden Bauteile, hier insbesondere der Gehäusebauteile, durch die erfindungsgemäßen Maßnahmen mit erhöhten Reibungs zahlen versehen sind, kann das Verdrehen der Maschine an einer Anlage oder einzelner Abschnitte der Maschine unter sich, z. B. im Falle eines Rotor-/Stator-Crashes, vermieden werden. Die Lösung erlaubt einfache Konstruktionen unter Vermeidung von hohem Aufwand. Einige Verbindungen, welche durch Normvorschriften eingeschränkt sind, werden durch die Erfindung überhaupt erst möglich.

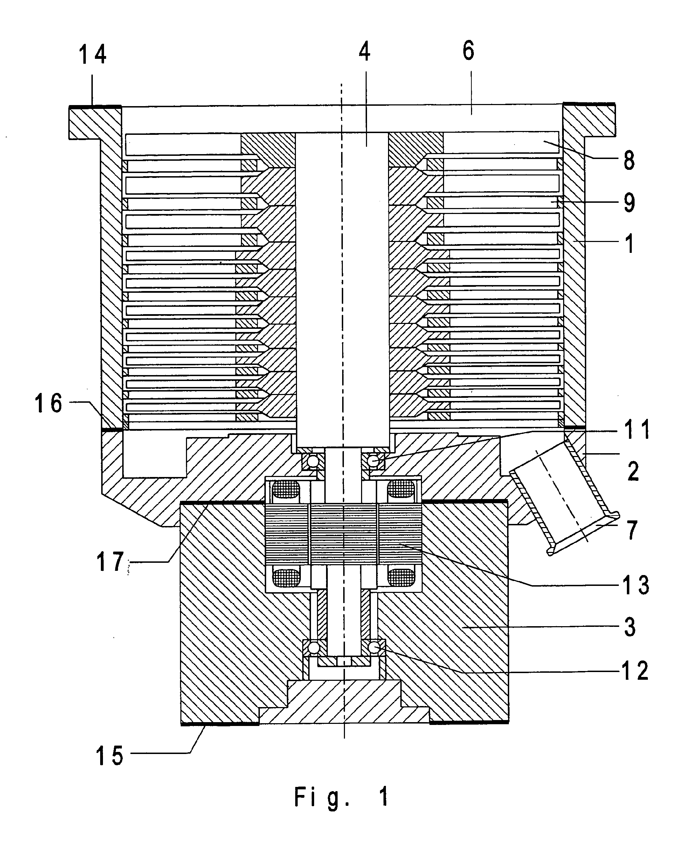

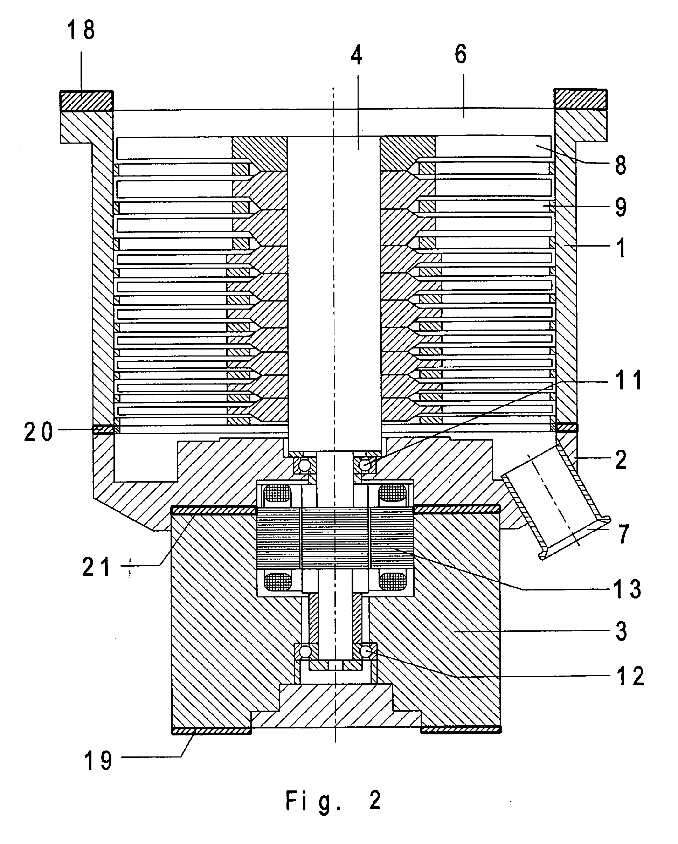

Anhand der Figuren 1 und 2 soll die Erfindung am Beispiel einer Turbomolekularpumpe näher erläutert werden.

Das Gehäuse der Pumpe besteht im vorliegenden Falle aus drei Abschnitten. Im oberen Abschnitt 1 befinden sich die pumpaktiven Elemente, bestehend aus Rotorscheiben 8 und Statorscheiben 9 sowie die Ansaugöffnung 6 zum Anschluss eines Rezipienten. Im mittleren Abschnitt 2 ist der Vorvakuumbereich mit der Gasaustrittsöffnung 7 untergebracht. Der untere Abschnitt 3 umfasst im wesentlichen den Antrieb 13 und Teile der Lagerung 12. Die Rotorscheiben 8 sind auf der Rotorwelle 4 fest montiert. Diese ist in Lagern 11 und 12 fixiert und wird durch den Motor 13 angetrieben.

Der obere Abschnitt 1 wird über die Verbindungsfläche 14 an ein Anlagenbauteil, z. B. einen Rezipienten, angeschlossen. Der untere Abschnitt 3 kann über die Verbindungsfläche 15 z. B. auf einer Grundplatte befestigt sein. Weitere Verbindungsflächen 16 und 17 bestehen zwischen den Abschnitten 1 und 2 bzw. 2 und 3.

Diese Verbindungsflächen 14 - 17 zwischen den externen Anschlüssen bzw. zwischen den einzelnen Abschnitten der feststehenden Bauteile, insbesondere Gehäusebauteilen, werden durch die erfindungsgemäßen Maßnahmen mit Oberflächen versehen, welche eine erhöhte Reibungszahl aufweisen. Dies kann dadurch geschehen, dass die Flächen mit einer Beschichtung erhöhter Reibungszahl oder mit einer mechanischen Struktur versehen werden. Auch Zwischenbauteile, wie z. B. Zentrierringe, beschichtet oder strukturiert, führen zur Lösung der Aufgabenstellung.

Die Maßnahmen können bei einer Maschine jeweils nur für eine oder auch für mehrere oder für alle Verbindungen angewandt werden.

## Patentansprüche

1. Maschine mit schnelldrehendem Rotor, bestehend aus feststehenden und rotierenden Bauteilen, wobei die feststehenden Bauteile mit Verbindungsflächen (14, 15) für externe Anschlüsse versehen sind, **dadurch gekennzeichnet, dass** die Verbindungsflächen mit Beschichtungen versehen sind, die eine hohe Reibungszahl aufweisen.

2. Maschine nach dem Oberbegriff des 1. Anspruches, **dadurch gekennzeichnet, dass** die Verbindungsflächen (14, 15) mit einer Struktur versehen sind, welche die Reibungszahl erhöht.

3. Maschine nach dem Oberbegriff des 1. Anspruches, **dadurch gekennzeichnet, dass** sich zwischen den Verbindungsflächen (14, 15) und den externen Anschlüssen Bauteile (18, 19) befinden, welche mit Beschichtungen versehen sind, die eine hohe Reibungszahl aufweisen.

4. Maschine nach dem Oberbegriff des 1. Anspruches, **dadurch gekennzeichnet, dass** sich zwischen den Verbindungsflächen (14, 15) und den externen Anschlüssen Bauteile (18, 19) befinden, welche mit einer Struktur versehen sind, die die Reibungszahl der Oberfläche erhöht.

5. Maschine mit schnelldrehendem Rotor, bestehend aus feststehenden und rotierenden Bauteilen, wobei die feststehenden Bauteile aus mehreren Abschnitten (1, 2, 3) bestehen, **dadurch gekennzeichnet, dass** die Verbindungsflächen (16, 17) zwischen den einzelnen Abschnitten mit Beschichtungen versehen sind, die eine hohe Reibungszahl aufweisen.

6. Maschine nach dem Oberbegriff des 5. Anspruches, **dadurch gekennzeichnet, dass** die Verbindungsflächen (16, 17) zwischen den einzelnen Abschnitten mit einer Struktur versehen sind, welche die Reibungszahl erhöht.

7. Maschine nach dem Oberbegriff des 5. Anspruches, **dadurch gekennzeichnet, dass** sich zwischen den Verbindungsflächen (16, 17) Bauteile (20, 21) befinden, welche mit Beschichtungen versehen sind, die eine hohe Reibungszahl aufweisen.

8. Maschine nach dem Oberbegriff des 5. Anspruches, **dadurch gekennzeichnet, dass** sich zwischen den Verbindungsflächen (16, 17) Bauteile (20, 21) befinden, welche mit einer Struktur versehen sind, die die Reibungszahl der Oberfläche erhöht.
